# EUROPÄISCHE PATENTSCHRIFT

(11) **EP 2 723 608 B1**
(45) Veröffentlichungstag und Bekanntmachung des Hinweises auf die Patenterteilung: **06.04.2016**
(21) Anmeldenummer: 12724573.6
(22) Anmeldetag: 23.05.2012
(51) Int. Cl.: B60N 2/08

(54) **LÄNGSEINSTELLBARER FAHRZEUGSITZ**
LONGITUDINALLY ADJUSTABLE VEHICLE SEAT
SIÈGE DE CONDUCTEUR RÉGLABLE LONGITUDINALEMENT

(30) Priorität: 21.06.2011 DE 202011102248 U
(43) Veröffentlichungstag der Anmeldung: 30.04.2014
(73) Patentinhaber: Johnson Controls Components GmbH & Co. KG, 67657 Kaiserslautern (DE)
(72) Erfinder: RUESS, Georg, 66851 Oberarnbach (DE); UTZINGER, Karl, 66919 Weselberg (DE)
(74) Vertreter: Wilhelm, Wolfgang
(86) Internationale Anmeldenummer: PCT/EP2012/002190
(87) Internationale Veröffentlichungsnummer: WO 2012/175166

(56) Entgegenhaltungen:
- FR-A1- 2 829 974
- FR-A1- 2 885 561

## Beschreibung

Die Erfindung betrifft einen längseinstellbaren Fahrzeugsitz, welcher beidseitig eine sitzfeste erste Sitzschiene, eine dieselbe führende fahrzeugstrukturfeste zweite Sitzschiene, eine Verriegelungsvorrichtung zur lösbaren Verriegelung der Sitzlängsposition mittels Sicherung der ersten Sitzschiene in der zweiten Sitzschiene und einen um eine Schwenkachse verschwenkbaren Hebel mit zwei mit den Verriegelungsvorrichtungen zusammenwirkenden Betätigungsenden aufweist.

### Stand der Technik

Aus der DE 10 2006 021 884 B3 sind längseinstellbare Fahrzeugsitze bekannt, bei denen die Sitzschienenverriegelung mittels eines um eine Schwenkachse verschwenkbaren Hebels in Verbindung mit oberhalb der Sitzschienenpaare angeordneten Betätigungsenden entriegelbar sind. Diese Betätigungsenden wirken bei einer Betätigung des Hebels, was durch ein Anheben des an der Sitzvorderseite unterhalb des Fahrzeugsitzes angeordneten Griffs erfolgt, infolge einer Schwenkbewegung um die Schwenkachse von oben auf entsprechende Betätigungselemente der Sitzschienenverriegelung.

Um die Sitzschienenverriegelung vor einem unbeabsichtigten Lösen aufgrund eines Drauftretens auf ein Betätigungsende zu schützen, ist das Vorsehen eines Trittschutzes bekannt, welcher das Betätigungsende mit Abstand überspannt und vor einer Belastung von oben schützt.

Aus der FR 2 885 561 ist ein gattungsgemässer, längseinstellbarer Fahrzeugsitz bekannt, welcher einen Trittschutz aufweist, der gleichzeitig einen Anschlag für das Betätigungsende nach oben darstellt.

Ein weiterer gattungsgemäßer längseinstellbarer Fahrzeugsitz ist auch aus der FR 2 829 974 bekannt.

### Aufgabe

Der Erfindung liegt die Aufgabe zu Grunde, einen Fahrzeugsitz der eingangs genannten Art zu verbessern.

### Lösung

Diese Aufgabe wird erfindungsgemäß durch einen längseinstellbaren Fahrzeugsitz mit den Merkmalen des Anspruches 1 gelöst. Vorteilhafte Ausgestaltungen, welche einzeln oder in Kombination miteinander eingesetzt werden können, sind Gegenstand der Unteransprüche.

Erfindungsgemäß weist ein längseinstellbarer Fahrzeugsitz beidseitig eine sitzfeste erste Sitzschiene, eine dieselbe führende fahrzeugstrukturfeste zweite Sitzschiene, eine Verriegelungsvorrichtung zur lösbaren Verriegelung der Sitzlängsposition mittels Sicherung der ersten Sitzschiene in der zweiten Sitzschiene und einen um eine Schwenkachse verschwenkbaren Hebel mit zwei mit den Verriegelungsvorrichtungen zusammenwirkenden Betätigungsenden auf, wobei mindestens eines der Betätigungsenden von einem Teilbereich eines Mehrfunktionsteils überspannt wird, welches sowohl einen Trittschutz bildet als auch eine Bewegung des Betätigungsendes nach oben begrenzt und damit eine Fehlbedingungssicherung für den Hebel bildet.

Dabei bildet das Mehrfunktionsteil in einem Knickbereich eine Brücke, die einen gekrümmten Übergangsbereich des Hebels zum Betätigungsende überspannt.

Dadurch, dass der Trittschutz sowohl das Betätigungsende schützt als auch eine Bewegung des Betätigungsendes nach oben begrenzt und damit eine Fehlbedingungssicherung für den Hebel bildet, kann die Benutzungssicherheit des Fahrzeugsitzes erhöht werden. Insbesondere bei dreitürigen Fahrzeugen mit einer Easy-Entry-Funktion ist eine Bewegungsbegrenzung des Betätigungsendes nach oben sinnvoll, damit eine Ansteuervorrichtung für eine Memoryvorrichtung, wie beispielsweise in der DE 10 2009 022 979 B3 oder der DE 10 2005 044 778 B4 offenbart, nicht beschädigt wird. Natürlich ist der Trittschutz auch bei anderen Fahrzeugen, wie bei fünftürigen Fahrzeugen, verwendbar.

Das Gewicht des Trittschutzes kann dadurch gering gehalten werden, dass ein Teilbereich durch einen Knickbereich gebildet ist.

Insbesondere bevorzugt ist der Hebel verschwenkbar in einer Lagerbuchse gelagert, welche durch das Mehrfunktionsteil gebildet oder direkt in derselben aufgenommen ist. Dadurch kann die Zahl der erforderlichen Teile verringert werden und das Gesamtgewicht weiter gesenkt werden. Zudem sind weniger Verbindungen mit der erste Sitzschiene erforderlich.

Insbesondere bevorzugt ist ein Querrohr Teil des Hebels, wobei ein Ende des Querrohres in der Lagerbuchse aufgenommen ist.

Ist die Lagerbuchse getrennt vom Mehrfunktionsteil ausgebildet und in einer im Mehrfunktionsteil ausgebildeten Lageröffnung formschlüssig aufgenommen, so ist sie bevorzugt von der Seite der Fahrzeugsitz-Mittellängsebene in die Lageröffnung eingeführt. Diese Einbaurichtung stellt sicher, dass sie korrekt eingebaut ist und in der Lageröffnung gehalten wird.

Das Mehrfunktionsteil weist bevorzugt einen Grundkörper auf, welcher sich im Wesentlichen in z-Richtung erstreckt und besagten Knickbereich und zwei sich vom Knickbereich aus erstreckende Bereiche aufweist, wobei sich die beiden Bereiche in Fahrzeugsitz-Längsrichtung erstrecken, insbesondere bevorzugt miteinander fluchten.

Vorteilhaft weist das Mehrfunktionsteil einen Grundkörper auf, welcher einen vorderen Endbereich aufweist, der sich in Querrichtung erstreckt.

Ebenso weist das Mehrfunktionsteil vorteilhaft einen Grundkörper auf, welcher einen hinteren Endbereich aufweist, der sich in Querrichtung erstreckt.

Vorteilhaft erstreckt sich der vordere Endbereich und/oder der hintere Endbereich bis zum außenseitigen Ende einer eben ausgebildeten Oberfläche der ersten Sitzschiene.

Das Mehrfunktionsteil weist bevorzugt einen Grundkörper mit einer unteren seitlichen Lasche auf, die sich in der x-y-Ebene, senkrecht vom Grundkörper aus erstreckt. Insbesondere bevorzugt ist in einem Teil des Knickbereichs eine Unterbrechung vorgesehen, welche sich bis in den Grundkörper hinein erstreckt, wobei das Betätigungsende des Hebels durch diese Unterbrechung hindurchragt, und die durch die Unterbrechung gebildete Seite des Grundkörpers einen die Bewegung des Betätigungsendes nach oben begrenzenden Anschlag bildet. Die Unterbrechung erstreckt sich bevorzugt bis in den Grundkörper hinein, insbesondere bis zur Mitte desselben.

Das Mehrfunktionsteil weist vorzugsweise einen Grundkörper mit einer oberen seitlichen Lasche auf, die sich in der x-y-Ebene, senkrecht vom Grundkörper aus erstreckt. Diese Lasche bildet eine Art Trittfläche und schützt den Betätigungsbereich des Hebels und damit die Sitzschienenverriegelung vor einem ungewollten Lösen.

Die beiden Schenkel des Knickbereichs schließen bevorzugt einen Winkel von maximal 90° zwischen sich ein. Der Winkel beträgt besonders bevorzugt ca. 60°. Der Eckbereich des Knickbereichs ragt insbesondere bevorzugt seitlich über die erste Sitzschiene hinaus.

Insbesondere kreuzt der Knickbereich im Bodenriss den gekrümmten Übergangsbereich des Hebels zum Betätigungsende in einem mittleren Bereich. Dies ermöglicht relativ geringe Torsionskräfte, die auf den Hebel wirken, wobei der Hebelarm größtmöglich ist, um der das vordere Ende des Hebels nach unten drückenden Kraft entgegenzuwirken.

Die Brücke weist dabei vorteilhaft eine ebene Oberfläche auf, welche in der x-y-Ebene verläuft.

Besonders vorteilhaft ist an der Oberseite des gekrümmten Übergangsbereich des Hebels zum Betätigungsende und/oder der Unterseite der Brücke im Kontaktbereich ein Dämpfungselement angeordnet.

### Figuren und Ausführungsformen der Erfindung

Im Folgenden ist die Erfindung anhand von einem in den Zeichnungen dargestellten vorteilhaften Ausführungsbeispiels näher erläutert. Die Erfindung ist jedoch nicht auf dieses Ausführungsbeispiel beschränkt. Es zeigen:
- Fig. 1:: eine perspektivische Ansicht eines an einem verriegelten Sitzschienenpaar angebrachten Mehrfunktionsteils,
- Fig. 2:: eine Detaildarstellung aus Fig. 1,
- Fig. 3:: eine Draufsicht auf die Darstellung von Fig. 1 und
- Fig. 4:: einen schematisch dargestellten Fahrzeugsitz.

Im Ausführungsbeispiel ist ein Fahrzeugsitz 1 für eine vordere Sitzreihe eines dreitürigen Kraftfahrzeuges vorgesehen, wobei die Anordnung des Fahrzeugsitzes 1 innerhalb des Kraftfahrzeuges und dessen gewöhnliche Fahrtrichtung die nachfolgend verwendeten Richtungsangaben definieren. Die Sitzlängsrichtung x verläuft in der Regel parallel zur Fahrtrichtung. Die Querrichtung wird im Folgenden auch als y-Richtung und die vertikale Richtung als z-Richtung bezeichnet.

Der Fahrzeugsitz 1 weist beidseitig jeweils eine sitzfeste erste Sitzschiene 2 und eine fahrzeugstrukturfeste zweite Sitzschiene 3 auf, welche - entsprechend der DE 10 2006 021 884 B3, deren Offenbarungsgehalt ausdrücklich mit einbezogen wird - zwei Sitzschienenpaare bilden. Die Sitzschienenpaare weisen jeweils eine nicht näher dargestellte Verriegelungsvorrichtung 4 auf, welche vorliegend entsprechend der vorstehend genannten DE 10 2006 021 884 B3 oder der DE 100 50 959 A1 ausgebildet ist, jedoch im Prinzip auch eine andere Ausgestaltung haben kann.

Zum Entriegeln der Verriegelungsvorrichtung 4 von Hand zwecks Sitzlängseinstellung ist ein Hebel 5 mit einem Handgriff vorgesehen. Der Hebel 5 kann beispielsweise, wie in der DE 10 2006 021 884 B3 oder der nachveröffentlichten DE 10 2010 014 394 A1 beschrieben, ausgebildet sein. Hierbei weist der Hebel 5 eine durch ein Querrohr gebildete Schwenkachse S, welche im Bereich oberhalb der beiden Sitzschienenpaare gelagert ist, und zwei abgekröpft und verbreitert ausgebildete Betätigungsenden 6 auf, welche über die erste Sitzschiene 2 ragen und mit der Verriegelungsvorrichtung 4 zusammenwirken und im Falle einer Betätigung des Hebels 5 die Sitzschienenverriegelung lösen. Hierbei ist vorliegend der Griff durchgehend mit einem der beiden Betätigungsenden 6 ausgebildet, wie in der Zeichnung dargestellt.

Die Verriegelung der Sitzschienen 2, 3 kann jedoch auch auf andere Weise erfolgen, wobei zum Entriegeln ein um eine Schwenkachse S verschwenkbarer Hebel vorgesehen ist, welcher mindestens ein Betätigungsende aufweist, das zumindest in einem Teilbereich oberhalb eines Sitzschienenpaares verläuft.

Die Ausgestaltung der gesamten Anordnung Sitzschienenpaare-Hebel, abgesehen von der Anordnung des mit dem Griff verbundenen Teils des Hebels 5 an dem die Schwenkachse S bildenden Querrohr, ist spiegelbildlich zur Fahrzeugsitz-Mittellängsebene x-z des Fahrzeugsitzes 1, so dass im Folgenden nur auf eine Seite näher eingegangen wird.

Das Querrohr ist auf beiden Seiten mit seinem Endbereich in einer Lagerbuchse 7 gelagert, die in einem auf der ersten Sitzschiene 2 angeordneten Blechbiegeteil aufgenommen ist, auf welches im Folgenden als Mehrfunktionsteil 8 Bezug genommen wird. Die Lagerfunktion kann bei entsprechender Ausgestaltung und Materialpaarung auch direkt vom Mehrfunktionsteil 8 übernommen werden.

Im Folgenden wird auf das Mehrfunktionsteil 8 näher eingegangen, welches den Kern der vorliegenden Erfindung bildet. Das Mehrfunktionsteil 8 weist einen sich im Wesentlichen in z-Richtung z erstreckenden Grundkörper 8a mit einem V-förmigen Knickbereich 8b, dessen beide Schenkel einen Winkel von etwas weniger als 90° einschließen, zwei miteinander fluchtende, in Längsrichtung verlaufende Bereiche 8c, 8d und zwei in Querrichtung y verlaufende Endbereiche 8e, 8f auf, wobei sich die Endbereiche 8e, 8f nach außen, also in Richtung Sitzaußenseite, erstrecken. Der Knickbereich 8b ragt mit seinem Eckbereich seitlich über die erste Sitzschiene 2 nach außen.

Am hinteren Endbereiche 8f ist eine entgegen der Sitzlängsrichtung x herausgebogene Lasche 8h mit einer Öffnung vorgesehen, durch die eine Schraube gesteckt und mit der ersten Sitzschiene 2 verbunden ist. Im vorderen Bereich 8c des Mehrfunktionsteils 8 ist eine Lageröffnung 8i aus dem Blech des Mehrfunktionsteils 8 ausgestanzt, welche die Lagerbuchse 7 vorliegend formschlüssig aufnimmt. Die Lagerbuchse 7 ist hierbei von der Seite des Querrohres in die Lageröffnung 8i eingeführt.

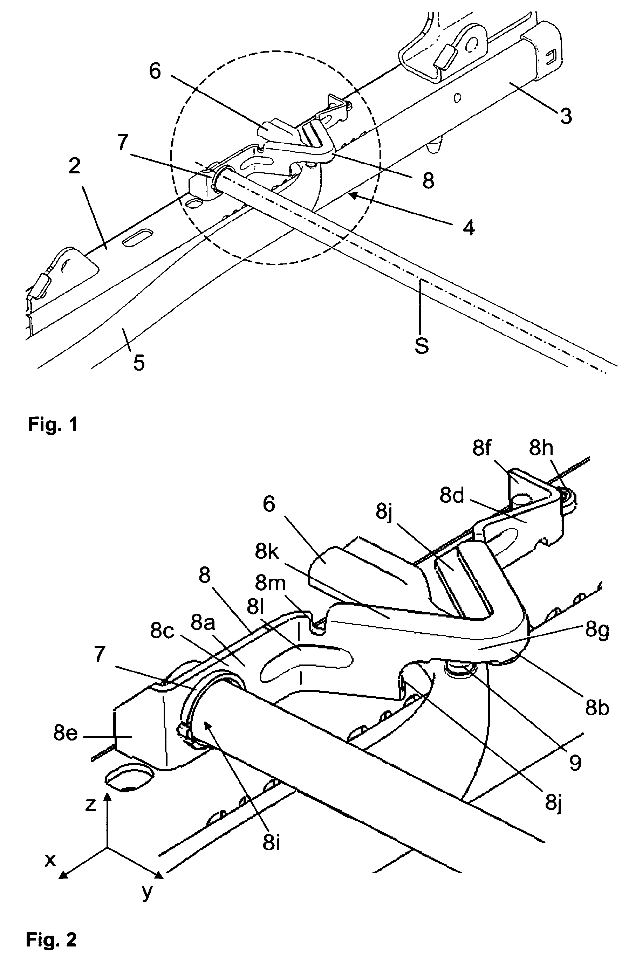

Benachbart der Lageröffnung 8i ist im Bereich 8c eine untere seitliche Lasche 8j vorgesehen, welche um 90° umgebogen ist und dadurch in der x-y-Ebene verläuft, wodurch sich eine großflächige Anlage an die erste Sitzschiene 2 ergibt. Die untere seitliche Lasche 8j folgt dem Verlauf des Knickbereichs 8b, wobei sie im Bereich, welcher seitlich über die erste Sitzschiene 2 hinüberragt, unterbrochen ist und sich die Unterbrechung bis etwa zur Mitte des Grundkörpers 8a in z-Richtung erstreckt (siehe Fig. 1), und reicht bis in den Bereich 8d, benachbart des hinteren Endbereichs 8f. Die Breite der unteren seitlichen Lasche 8j (senkrecht zum Grundkörper 8a) ist hierbei in den Bereichen 8c, 8d deutlich größer als im Knickbereich 8b. Die untere seitliche Lasche 8j weist vorliegend eine Öffnung auf, welche ebenfalls der Befestigung an der ersten Sitzschiene 2 dient, wobei diese Öffnung und der vordere Endbereich 8e die Lagerbuchse 7 annähernd mittig zwischen sich aufnehmen.

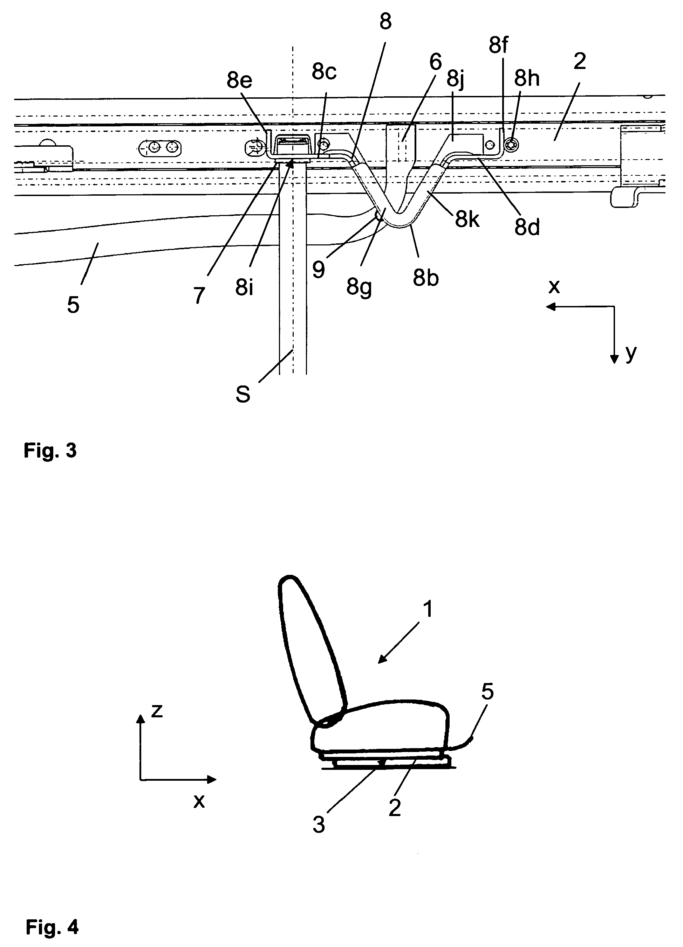

Im Knickbereich 8b ist ferner eine obere seitliche Lasche 8k vorgesehen, deren Breite derjenigen der unteren seitlichen Lasche 8j in diesem Bereich entspricht, die aber durchgehend ausgebildet ist (siehe Fig. 3). Aufgrund der unten vorgesehenen Unterbrechung bildet die obere seitliche Lasche 8k in Verbindung mit dem verbliebenen Teil des Grundkörpers 8a eine Brücke 8g, wobei die Oberseite der Brücke vorliegend nicht gewölbt, sondern über die gesamte Länge in der x-y-Ebene verlaufend angeordnet ist.

Im Übergangsbereich zwischen dem vorderen Bereich 8c und dem Knickbereich 8b sowie dem hinteren Bereich 8d und dem Knickbereich 8b ist jeweils mittig im Grundkörper 8a eine langlochförmige Sicke 8l vorgesehen, welche Verstärkungsgründe hat. Ferner ist aus herstellungstechnischen Gründen eine Entlastungskerbe 8m am vorderen und hinteren Ende der oberen seitlichen Lasche 8k vorgesehen.

Das Mehrfunktionsteil 8 hat - neben der Lagerfunktion für das Querrohr - zwei weitere Funktionen. So schützt der Knickbereich 8b das Betätigungsende 6 des Hebels 5, welches - auf der in der Zeichnung dargestellten Seite als Verlängerung des Griffs, welcher unten am Querrohr vorbeigeführt ist - nach außen gebogen ist, direkt nach seiner Abkröpfung unter dem Knickbereich 8b des Mehrfunktionsteils 8 verläuft und auf der Außenseite der ersten Sitzschiene 2 endet. Dadurch, dass das Betätigungsende 6 des Hebels 5 unter dem Knickbereich 8b verläuft, ist es geschützt, d.h. der Knickbereich 8b bildet einen Trittschutz für das Betätigungsende 6.

Ferner bildet der Knickbereich 8b im Bereich der Unterbrechung der seitlichen unteren Lasche 8j einen Anschlag, welcher die Bewegung des Betätigungsendes 6 nach oben begrenzt, d.h. der Griff kann nicht beliebig weit nach unten gedrückt werden, sondern die Bewegung wird durch das Mehrfunktionsteil 8 begrenzt, wodurch der Hebel 5 vor einer Fehlbedienung geschützt wird. Hierbei trifft zur Bewegungsbegrenzung nach oben der gekrümmt ausgebildete Übergangsbereich zum Betätigungsende 6 auf den überstehenden Eckbereich des Knickbereichs 8b des Mehrfunktionsteils 8 (siehe Fig. 3). Zur Dämpfung eines gegebenenfalls erfolgenden Aufpralls ist am Hebel 5 im Übergangsbereich zum Betätigungsende 6 ein Dämpfungselement 9 angebracht, beispielsweise ein Gummipuffer oder ein Schaumstoffelement. Im Prinzip kann das Dämpfungselement auch auf der Unterseite der Brücke 8g angeordnet sein. Um die möglicherweise auftretenden, relativ großen Kräfte abstützen zu können, sind die beiden Endbereiche 8e, 8f vorgesehen, welche bis zum Ende der flach ausgebildeten Oberfläche der ersten Sitzschiene 2 reichen (siehe Fig. 3), so dass die gesamte Schienenbreite genutzt wird.
Obwohl das Mehrfunktionsteil 8 anhand eines Blechbiegeteils beschrieben wurde, ist auch eine andere Herstellung des Mehrfunktionsteils 8 möglich, insbesondere mittels Spritzgießens.
Ferner ist das Mehrfunktionsteil 8 vorliegend mittels zwei Schrauben an der ersten Sitzschiene 2 angebracht. Dies kann jedoch auch mittels Schweißens oder auf sonstige geeignete Weise erfolgen.

### Bezugszeichenliste

- 1: Fahrzeugsitz
- 2: erste Sitzschiene
- 3: zweite Sitzschiene
- 4: Verriegelungsvorrichtung
- 5: Hebel
- 6: Betätigungsende
- 7: Lagerbuchse
- 8: Mehrfunktionsteil
- 8a: Grundkörper
- 8b: Knickbereich
- 8c: Bereich
- 8d: Bereich
- 8e: vorderer Endbereich
- 8f: hinterer Endbereich
- 8g: Brücke
- 8h: Lasche
- 8i: Lageröffnung
- 8j: untere seitliche Lasche
- 8k: obere seitliche Lasche
- 8l: langlochförmige Sicke
- 8m: Entlastungskerbe
- 9: Dämpfungselement

- S: Schwenkachse
- x: Sitzlängsrichtung
- y: Querrichtung
- z: Verriegelungsrichtung

## Patentansprüche

1. Längseinstellbarer Fahrzeugsitz (1),
welcher beidseitig eine sitzfeste erste Sitzschiene (2), eine dieselbe führende fahrzeugstrukturfeste zweite Sitzschiene (3), eine Verriegelungsvorrichtung (4) zur lösbaren Verriegelung der Sitzlängsposition mittels Sicherung der ersten Sitzschiene (2) in der zweiten Sitzschiene (3) und einen um eine Schwenkachse (S) verschwenkbaren Hebel (5) mit zwei mit den Verriegelungsvorrichtungen (4) zusammenwirkenden Betätigungsenden (6) aufweist,
wobei mindestens eines der Betätigungsenden (6) von einem Teilbereich eines Mehrfunktionsteils (8) überspannt wird, welches sowohl einen Trittschutz bildet als auch eine Bewegung des Betätigungsendes (6) nach oben begrenzt und damit eine Fehlbedingungssicherung für den Hebel (5) bildet,
**dadurch gekennzeichnet, dass**
das Mehrfunktionsteil (8) in einem Knickbereich (8b) eine Brücke (8g) bildet, die einen gekrümmten Übergangsbereich des Hebels (5) zum Betätigungsende (6) überspannt.

2. Fahrzeugsitz nach Anspruch 1, **dadurch gekennzeichnet, dass** der ein Betätigungsende (6) überspannende Teilbereich durch den Knickbereich (8b) des Mehrfunktionsteils (8) gebildet ist.

3. Fahrzeugsitz nach einem der vorhergehenden Ansprüche, **dadurch gekennzeichnet, dass** der Hebel (5) verschwenkbar in einer Lagerbuchse (7) gelagert ist, welche durch das Mehrfunktionsteil (8) gebildet oder direkt in derselben aufgenommen ist.

4. Fahrzeugsitz nach Anspruch 3, **dadurch gekennzeichnet, dass** ein Querrohr Teil des Hebels (5) ist, wobei ein Ende des Querrohres in der Lagerbuchse (7) aufgenommen ist.

5. Fahrzeugsitz nach einem der Ansprüche 3 oder 4, **dadurch gekennzeichnet, dass** die Lagerbuchse (7) getrennt vom Mehrfunktionsteil (8) ausgebildet und in einer im Mehrfunktionsteil (8) ausgebildeten Lageröffnung (8i) formschlüssig aufgenommen ist, wobei sie von der Seite der Fahrzeugsitz-Mittellängsebene in die Lageröffnung (8i) eingeführt ist.

6. Fahrzeugsitz nach einem der vorhergehenden Ansprüche, **dadurch gekennzeichnet, dass** das Mehrfunktionsteil (8) einen Grundkörper (8a) aufweist, welcher sich im Wesentlichen in z-Richtung (z) erstreckt und den Knickbereich (8b) und zwei sich vom Knickbereich (8b) aus erstreckende Bereiche (8c, 8d) aufweist, wobei sich die beiden Bereiche (8c, 8d) in Fahrzeugsitz-Längsrichtung (x) erstrecken.

7. Fahrzeugsitz nach Anspruch 6, **dadurch gekennzeichnet, dass** die beiden Bereiche (8c, 8d) miteinander fluchten.

8. Fahrzeugsitz nach einem der vorhergehenden Ansprüche, **dadurch gekennzeichnet, dass** das Mehrfunktionsteil (8) einen Grundkörper (8a) aufweist, welcher eine untere seitliche Lasche (8j) aufweist, die sich in der x-y-Ebene, senkrecht vom Grundkörper (8a) aus erstreckt.

9. Fahrzeugsitz nach einem der vorhergehenden Ansprüche, **dadurch gekennzeichnet, dass** das Mehrfunktionsteil (8) einen Grundkörper (8a) aufweist, welcher eine obere seitliche Lasche (8k) aufweist, die sich in der x-y-Ebene, senkrecht vom Grundkörper (8a) aus erstreckt.

10. Fahrzeugsitz nach einem der vorhergehenden Ansprüche, **dadurch gekennzeichnet, dass** das Mehrfunktionsteil (8) einen Grundkörper (8a) mit dem Knickbereich (8b) aufweist, und eine untere seitliche Lasche (8j) vorgesehen ist, die sich über den Knickbereich (8b) hinaus erstreckend, in der x-y-Ebene, senkrecht vom Grundkörper (8a) aus erstreckt, wobei die untere Lasche (8j) in einem Teil des Knickbereichs (8b) eine Unterbrechung aufweist, welche sich in z-Richtung bis in den Grundkörper (8a) hinein erstreckt, wobei das Betätigungsende (6) des Hebels (5) durch diese Unterbrechung hindurchragt, und die durch die Unterbrechung gebildete Seite des Grundkörpers (8a) einen die Bewegung des Betätigungsendes (6) nach oben begrenzenden Anschlag bildet.

11. Fahrzeugsitz nach Anspruch 10, **dadurch gekennzeichnet, dass** sich die Unterbrechung in z-Richtung bis zur Mitte des Grundkörpers (8a) hinauf erstreckt.

12. Fahrzeugsitz nach einem der vorhergehenden Ansprüche, **dadurch gekennzeichnet, dass** das Mehrfunktionsteil (8) einen Grundkörper (8a) mit dem Knickbereich (8b) aufweist, dessen beide Schenkel einen Winkel von maximal 90°, vorzugsweise 60° +/- 10°, einschließen.

13. Fahrzeugsitz nach einem der vorhergehenden Ansprüche, **dadurch gekennzeichnet, dass** das Mehrfunktionsteil (8) einen Grundkörper (8a) mit dem Knickbereich (8b) aufweist, dessen Eckbereich seitlich über die erste Sitzschiene (2) hinausragt.

14. Fahrzeugsitz nach einem der vorhergehenden Ansprüche, **dadurch gekennzeichnet, dass** an der Oberseite des gekrümmten Übergangsbereichs des Hebels (5) zum Betätigungsende (6) oder der Unterseite der Brücke (8g) im Kontaktbereich ein Dämpfungselement (9) angeordnet ist.

## Claims

1. Longitudinally adjustable vehicle seat, which on both sides has a first seat rail (2) fixed to the seat, a second seat rail (3) which guides said first seat rail and is fixed to the vehicle structure, a locking device (4) for releasably locking the longitudinal position of the seat by means of securing the first seat rail (2) in the second seat rail (3), and a lever (5) which can be pivoted about a pivot axis (S) and has two actuating ends (6) which interact with the locking devices (4), wherein at least one of the actuating ends (6) is spanned by a subregion of a multifunctional part (8) which forms both a step guard and also limits a movement of the actuating end (6) upward and thus forms a safeguard against erroneous operation of the lever (5), **characterized in that** the multifunctional part (8) forms a bridge (8g) in a bend region (8b), which bridge spans a curved transition region of the lever (5) to the actuating end (6).

2. Vehicle seat according to Claim 1, **characterized in that** the subregion spanning an actuating end (6) is formed by the bend region (8b) of the multifunctional part (8).

3. Vehicle seat according to either of the preceding claims, **characterized in that** the lever (5) is pivotably mounted in a bearing bush (7) which is formed by the multifunctional part (8) or is directly accommodated in said bush.

4. Vehicle according to Claim 3, **characterized in that** a transverse tube is part of the lever (5), wherein an end of the transverse tube is accommodated in the bearing bush (7).

5. Vehicle seat according to either of Claims 3 and 4, **characterized in that** the bearing bush (7) is formed separately from the multifunctional part (8) and is positively accommodated in a bearing opening (8i) formed in the multifunctional part (8), wherein said bush is introduced into the bearing opening (8i) from the side of the vehicle seat longitudinal center plane.

6. Vehicle seat according to one of the preceding claims, **characterized in that** the multifunctional part (8) has a basic body (8a) which extends substantially in the z-direction (z) and has the bend region (8b) and two regions (8c, 8d) extending from the bend region (8b), wherein the two regions (8c, 8d) extend in a vehicle seat longitudinal direction (x).

7. Vehicle seat according to Claim 6, **characterized in that** the two regions (8c, 8d) are aligned with one another.

8. Vehicle seat according to one of the preceding claims, **characterized in that** the multifunctional part (8) has a basic body (8a) which has a lower lateral lug (8a) which extends in the x-y plane, perpendicularly from the basic body (8a).

9. Vehicle seat according to one of the preceding claims, **characterized in that** the multifunctional part (8) has a basic body (8a) which has an upper lateral lug (8k) which extends in the x-y plane, perpendicularly from the basic body (8a).

10. Vehicle seat according to one of the preceding claims, **characterized in that** the multifunctional part (8) has a basic body (8a) with the bend region (8b), and a lower lateral lug (8a) is provided which, extending beyond the bend region (8b), extends in the x-y plane, perpendicularly from the basic body (8a), wherein the lower lug (8j) has an interruption in a part of the bend region (8b), which interruption extends in the z-direction into the basic body (8a), wherein the actuating end (6) of the lever (5) projects through this interruption, and the side of the basic body (8a) which is formed by the interruption forms a stop which limits the movement of the actuating end (6) upward.

11. Vehicle seat according to Claim 10, **characterized in that** the interruption in the z-direction extends up to the center of the basic body (8a).

12. Vehicle seat according to one of the preceding claims, **characterized in that** the multifunctional part (8) has a basic body (8a) with the bend region (8b) whose two legs form an angle of at most 90°, preferably 60° +/- 10°.

13. Vehicle seat according to one of the preceding claims, **characterized in that** the multifunctional part (8) has a basic body (8a) with the bend region (8b) whose corner region projects laterally beyond the first seat rail (2).

14. Vehicle seat according to one of the preceding claims, **characterized in that** a damping element (9) is arranged on the upper side of the curved transition region of the lever (5) to the actuating end (6) or the lower side of the bridge (8g) in the contact region.

## Revendications

1. Siège de véhicule (1) réglable longitudinalement,
qui présente sur les deux côtés un premier rail de siège (2) solidaire du siège, un deuxième rail de siège (3) solidaire de la structure du véhicule et guidant celui-ci, un dispositif de verrouillage (4) pour le verrouillage libérable de la position longitudinale du siège par blocage du premier rail de siège (2) dans le deuxième rail de siège (3), et un levier (5) pouvant pivoter autour d'un axe de pivotement (S) avec deux extrémités d'actionnement (6) coopérant avec les dispositifs de verrouillage (4),
dans lequel au moins une des extrémités d'actionnement (6) est recouverte par une région partielle d'une pièce multifonctionnelle (8), qui forme une protection de marche et qui limite aussi un mouvement de l'extrémité d'actionnement (6) vers le haut et qui forme ainsi une sécurité de condition erronée pour le levier (5),
**caractérisé en ce que** la pièce multifonctionnelle (8) forme dans une région coudée (8b) un pont (8g), qui enjambe une région de transition courbée du levier (5) vers l'extrémité d'actionnement (6).

2. Siège de véhicule selon la revendication 1, **caractérisé en ce que** la région partielle recouvrant une extrémité d'actionnement (6) est formée par la région coudée (8b) de la pièce multifonctionnelle (8).

3. Siège de véhicule selon l'une des revendications précédentes, **caractérisé en ce que** le levier (5) est monté de façon pivotante dans un coussinet de palier (7), qui est formé par la pièce multifonctionnelle (8) ou qui est logé directement dans celle-ci.

4. Siège de véhicule selon la revendication 3, **caractérisé en ce qu'**un tube transversal fait partie du levier (5), dans lequel une extrémité du tube transversal est logée dans le coussinet de palier (7).

5. Siège de véhicule selon l'une des revendications 3 ou 4, **caractérisé en ce que** le coussinet de palier (7) est formé séparément de la pièce multifonctionnelle (8) et il est logé par emboîtement dans une ouverture de palier (8i) formée dans la pièce multifonctionnelle (8), dans lequel il est introduit dans l'ouverture de palier (8i) à partir du plan longitudinal médian du siège de véhicule.

6. Siège de véhicule selon l'une quelconque des revendications précédentes, **caractérisé en ce que** la pièce multifonctionnelle (8) présente un corps de base (8a), qui s'étend essentiellement dans la direction z (z) et qui présente la région coudée (8b) et deux régions (8c, 8d) s'étendant à partir de la région coudée (8b), dans lequel les deux régions (8c, 8d) s'étendent dans la direction longitudinale (x) du siège de véhicule.

7. Siège de véhicule selon la revendication 6, **caractérisé en ce que** les deux régions (8c, 8d) sont en alignement l'une avec l'autre.

8. Siège de véhicule selon l'une quelconque des revendications précédentes, **caractérisé en ce que** la pièce multifonctionnelle (8) présente un corps de base (8a), qui présente une patte latérale inférieure (8j), qui s'étend dans le plan x-y, perpendiculairement à partir du corps de base (8a).

9. Siège de véhicule selon l'une quelconque des revendications précédentes, **caractérisé en ce que** la pièce multifonctionnelle (8) présente un corps de base (8a), qui présente une patte latérale supérieure (8k), qui s'étend dans le plan x-y, perpendiculairement à partir du corps de base (8a).

10. Siège de véhicule selon l'une quelconque des revendications précédentes, **caractérisé en ce que** la pièce multifonctionnelle (8) présente un corps de base (8a) avec la région coudée (8b), et il est prévu une patte latérale inférieure (8j) qui, s'étendant au-delà de la région coudée (8b), s'étend dans le plan x-y, perpendiculairement à partir du corps de base (8a), dans lequel la patte inférieure (8j) présente dans une partie de la région coudée (8b) une interruption, qui s'étend dans la direction z jusque dans le corps de base (8a), dans lequel l'extrémité d'actionnement (6) du levier (5) passe à travers cette interruption, et le côté du corps de base (8a) formé par cette interruption forme une butée limitant vers le haut le mouvement de l'extrémité d'actionnement (6).

11. Siège de véhicule selon la revendication 10, **caractérisé en ce que** l'interruption s'étend dans la direction z jusqu'au milieu du corps de base (8a).

12. Siège de véhicule selon l'une quelconque des revendications précédentes, **caractérisé en ce que** la pièce multifonctionnelle (8) présente un corps de base (8a) avec la région coudée (8b), dont les deux branches forment un angle maximal de 90°, de préférence de 60° ± 10°.

13. Siège de véhicule selon l'une quelconque des revendications précédentes, **caractérisé en ce que** la pièce multifonctionnelle (8) présente un corps de base (8a) avec la région coudée (8b), dont la région d'angle sort latéralement au-delà du premier rail de siège (2).

14. Siège de véhicule selon l'une quelconque des revendications précédentes, **caractérisé en ce qu'**un élément d'amortissement (9) est disposé sur le côté supérieur de la région de transition courbée du levier (5) vers l'extrémité d'actionnement (6) ou sur le côté inférieur du pont (8g) dans la région de contact.
